(19) Europäisches Patentamt

European Patent Office

Office européen des brevets

(11) **EP 1 179 701 B1**

(12) **EUROPÄISCHE PATENTSCHRIFT**

(45) Veröffentlichungstag und Bekanntmachung des Hinweises auf die Patenterteilung:
**21.12.2005 Patentblatt 2005/51**

(51) Int Cl.⁷: **F16L 37/00**

(21) Anmeldenummer: **01118023.9**

(22) Anmeldetag: **25.07.2001**

(54) **Flachflächen-Schnellkupplung**

Quick-connect coupling

Raccord rapide

(84) Benannte Vertragsstaaten:
**AT BE CH CY DE DK ES FI FR GB GR IE IT LI LU MC NL PT SE TR**

(30) Priorität: **31.07.2000 IT MI001770**

(43) Veröffentlichungstag der Anmeldung:
**13.02.2002 Patentblatt 2002/07**

(73) Patentinhaber: **FASTER S.p.A.**
**20066 Melzo (Milano) (IT)**

(72) Erfinder: **Arosio, Massimo**
**26027 Rivolta d'Adda (IT)**

(74) Vertreter: **Mayer, Hans Benno**
**de Dominicis & Mayer S.r.l.**
**Piazzale Marengo, 6**
**20121 Milano (IT)**

(56) Entgegenhaltungen:
**FR-A- 2 120 454     US-A- 5 937 899**

## Beschreibung

Die vorstehende Erfindung betrifft eine Flachflächen-Schnellkupplung.

Es sind seit längerer Zeit Flachflächen-Schnellkupplungen aus dem Stand der Technik bekannt geworden. Diese bestehen aus einem zapfenförmigen Bauteil, das mit einem, eine Ausnehmung aufweisenden Bauteil, verbindbar ist.

Eine solche bekannte Schnellkupplung findet auf verschiedenen Gebieten der Technik Einsatz und dient dazu, Arbeitsgeräte, die über eine unter Druck stehende hydraulische Flüssigkeit betätigbar sind, mit einer Vorrichtung zu verbinden, die für die Anlieferung der unter Druck stehenden hydraulischen Flüssigkeit dient.

Ein klassisches Anwendungsgebiet für den Einsatz solcher Flachflächen-Schnellkupplungen ist auf dem Gebiete der Landmaschinen oder auf dem Gebiete von Spezialmaschinen für den Bau und die Instandhaltung von Strassenläufen zu sehen.

So kommen z.B. auf dem Gebiete der Landmaschinen Schnellkupplungen zum Einsatz, die dazu bestimmt sind, eine Zugmaschine, z.B. einen Traktor, mit Hilfseinrichtungen zu verbinden. Dokument US-A-5937899 offenbart eine Schnellkupplung mit einem Verbindungsteil, die auf dem gebiete der Landmaschinen kommt.

Die bekannten Flachflächen-Schnellkupplungen haben sich als sehr nützlich und hilfreich erwiesen, besonders aufgrund der Tatsache, dass während des Zusammenfügens der Kupplungsteile ein unerwünschter Ölaustritt vermieden werden kann und eine Verunreinigung des Bodens unterbleibt. Ein Nachteil der bekannten Flachflächen-Schnellkupplungen ist darin zu sehen, dass bei dieser Kupplungsart aufgrund des vermiedenen Ölaustrittes keine Möglichkeit besteht, den Öldruck im Inneren der Kupplung vollständig abzubauen und aus diesem Grunde ist es nicht möglich, ein Zusammenfügen der zwei Schnellkupplungsteile vorzunehmen, sofern in der Hydraulikanlage noch restliche, innere Flüssigkeitsdrücke vorhanden sind.

Der Benutzer der Flachflächen-Schnellkupplung meint in einem solchen Fall, dass die Vorrichtungen, welche die Flachflächen-Schnellkupplungen aufnehmen, Fehler aufweisen oder deren Funktionsweise unzulänglich ist.

Der Benutzer versucht daher oft, ein Verbinden der Bauteile, welche die Flachflächen-Schnellkupplung bilden, unter Aufwand grosser Kräfte durchzuführen, was zu einer schweren Beschädigung der Kupplungsbauteile und einem unvermeidlichen Austritt der hydraulischen Flüssigkeit führt.

Es ist daher Aufgabe der vorstehenden Erfindung, eine verbesserte Flachflächen-Schnellkupplung vorzuschlagen, welche ein Zusammenfügen der Kupplungsbauteile ohne jeglichen Ölaustritt ermöglicht und dies ohne die Notwendigkeit, verbleibende Restdrucke im Inneren der Schnellkupplung überwinden zu müssen.

Die erfindungsgemässe Aufgabe wird mit einer Flachflächen-Schnellkupplung gelöst, welche aus einem äusseren, rohrförmigen Bauteil und einer in das rohrförmige Bauteil eingeschraubten Muffe besteht, und in Axialrichtung verschiebbar ein rohrförmiges Bauteil aufnimmt, das in an sich bekannter Weise mit Teilen zur Schaffung einer Flachflächen-Schnellkupplung wirkverbunden ist, wobei das rohrförmige Bauteil mit einem rohrförmigen Körper verbunden ist, der an seiner Aussenseite Dichtungsringe aufweist, und in den Körper des rohrförmigen Bauteiles eine Durchgangsbohrung eingebracht ist, die über eine Querbohrung mit einer Kammer der Schnellkupplung in Verbindung steht und diese Durchgangsbohrung einen Ventilsitz aufweist, der durch einen Ventilstössel absperrbar ist, wobei der Ventilstössel durch eine Feder vorgespannt wird und eine Verlängerung aufweist, die in eine Kammer ragt, welche zwischen dem rohrförmigen Bauteil und dem rohrförmigen Körper gebildet ist und von der Kammer eine Durchgangsbohrung abzweigt, die mit einem Ablaufstutzen in Verbindung steht.

Mit einer Schnellkupplung dieser Art wird es ermöglicht, unter Betätigen eines rohrförmigen Bauteiles der Kupplung ein Öffnen eines Ablassventiles, das im Inneren der Kupplung vorgesehen ist, zu bewirken und damit vollständig die Hydraulikflüssigkeit abzuleiten und verbleibende Restdrücke im Inneren der Schnellkupplung abzubauen.

Der Erfindungsgegenstand wird nun genauer anhand eines Ausführungsbeispieles beschrieben und in den beigefügten Zeichnungen dargestellt.

Es zeigen:

Figur 1 das zapfenförmige Bauteil einer Schnellkupplung in Gebrauchslage;
Figur 2 die Schnellkupplung während des Zusammenfügevorganges.

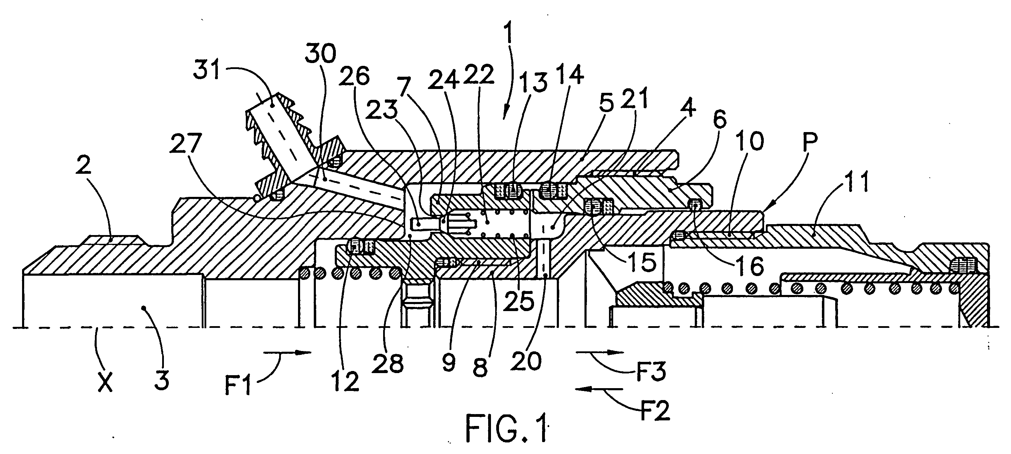

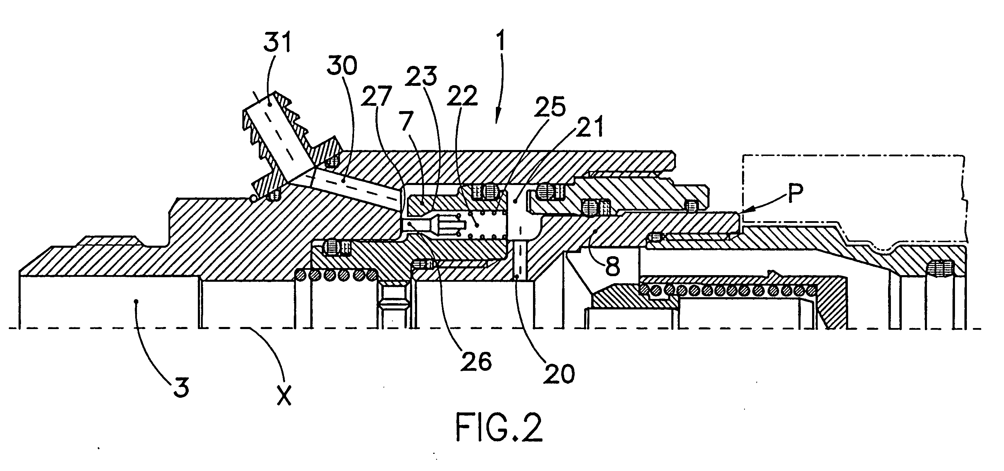

Aus Gründen der Übersichtlichkeit ist in den Figuren 1 und 2 lediglich eine zapfenförmig ausgebildete Flachflächen-Schnellkupplung dargestellt.

Die erfinderische Lösung kann selbstverständlich auch auf eine Schnellkupplung mit Aufnahmebohrung übertragen werden. Der Figur 1 ist eine Flachflächen-Schnellkupplung zu entnehmen, die gesamthaft mit 1 gekennzeichnet ist.

Kupplungen dieser Art sind vom Stand der Technik her bekannt und weisen einen Stutzen 2 mit einem Gewinde auf, um ein mechanisches Verbinden, z. B. mit dem Körper eines Kollektors, für die unter Druck stehende hydraulische Flüssigkeit, zu ermöglichen. Die hydraulische Füssigkeit fliesst in die mit 3 gekennzeichnete Hauptkammer der Kupplung.

Mit einem Innengewinde 4, welches an der Vorderseite des rohrförmigen Körpers 5 vorgesehen ist, ist ein Stutzen 6 montiert, dem ein rohrförmiger Körper 7 folgt, der über ein Gewinde 9 mit einem rohrförmigen Bauteil 8, welches nach vorne absteht, verbunden ist.

Über ein Gewinde 10 ist der rohrförmige Körper 8 mit einer Verlängerung 11 verbunden, die an sich aus dem Stand der Technik bekannt ist und als zapfenförmiges Verbindungsteil der Schnellkupplung dient.

Wie der Zeichnung zu entnehmen ist, sind zwischen dem rohrförmigen Bauteil 7 und dem äusseren, rohrförmigen Körper 5 sowie dem Stutzen 6 und dem rohrförmigen äusseren Körper 5 Dichtungsringe 12, 13 vorgesehen.

Weitere Dichtungen 15, 16 sind zwischen dem Stutzen 6 und dem Aussenumfang des rohrförmigen Körpers 8 vorgesehen.

Von besonderer Wichtigkeit sind die Dichtungen 12, 13 und 15.

Ferner ist vorgesehen, dass die Flachflächen-Schnellkupplung zwischen dem rohrförmigen Körper 7 und dem innenliegenden, rohrförmigen Bauteil ein Dichtungsring 13 angeordnet ist und zwischen dem Stutzen 6 und der Innenwand des rohrförmigen Körpers 5 ein weiterer Dichtungsring 14 angeordnet ist, und auch zwischen dem rohrförmigen Körper 7 und dem rohrförmigen Körper 5 ein Dichtungsring 12, sowie zwischen dem Stutzen 6 und dem rohrförmigen Bauteil 8 ein Dichtungsring 15 angeordnet ist.

Der Dichtungsring 12 wird über den hydraulischen Druck, der in der Hauptkammer 3 vorhanden ist, mit einer Kraft F1 beaufschlagt.

Der Dichtungsring 13 wird durch eine Kraft F2 beaufschlagt, die in entgegengesetzter Richtung gegenüber der Kraft F1 wirkt und schliesslich über die Durchgangsbohrung 20, die in den rohrförmigen Körper 8 eingebracht ist, wird der Dichtungsring 14 über die unter Druck stehende hyraulische Flüssigkeit mit einer Kraft F3 beeinflusst, welche der Kraft F2 entgegengesetzt ist.

Auf Grundlage der Gleichung

$$F1 + F3 = F2$$

erfolgt ein vorteilhaftes Ausgleichen der hydrostatischen Kräfte F1, F2 F3 im Inneren der Schnellkupplung.

Diese Tatsache ermöglicht es, das rohrförmige Bauteil 8 frei und ungehindert zu verschieben, sofern dieses Bauteil durch eine Kraft P beeinflusst wird und die Verschiebebewegung des Bauteiles 8 erfolgt gemeinsam mit dem rohrförmigen Bauteil 7 im Inneren des Körpers 5 der Schnellkupplung 1.

Der Durchgang 20, der sich von der rohrförmigen Kammer 3 durch den rohrförmigen Körper 8 erstreckt, mündet in eine Kammer 21, welche vom rohrförmigen Körper 8 sowie vom Stutzen 6 begrenzt ist.

Die Kammer 21 steht mit einer weiteren Kammer 22, die in den rohrförmigen Körper 7 eingearbeitet ist, in Verbindung. Die Kammer 22 erstreckt sich in Axialrichtung des Körpers 7.

Die Kammer 22 weist eine Öffnung 23 auf, welche als Ventilsitz ausgebildet ist und einen Ventilstössel 24 aufnimmt, der unter Zuhilfenahme einer Feder 25 vorgespannt und auf den Ventilsitz gedrückt wird, wobei der Ventilsitz in vorteilhafter Weise als konische Aufnahme ausgebildet ist.

Der Ventilstössel 24 weist eine Verlängerung auf, die zu einer Wand 27 gerichtet ist und senkrecht zur Achse X des Ventilkörpers 1 angeordnet ist.

Die Wand 27 begrenzt eine ringförmige Kammer 28, die im Inneren des rohrförmigen Körpers 5 gebildet ist und durch den rohrförmigen Körper 7 begrenzt ist.

Aus der Kammer 28 mündet über den Körper 5 ein Durchgang 30 in einen Stutzen 3 der mit einem Rohr (nicht dargestellt) verbindbar ist, wobei sich das Rohr zu einem Sammelbehälter für die Hydraulikflüssigkeit (nicht dargestellt) erstreckt. Um das zapfenförmig ausgebildete Kupplungsstück nach Figur 1 und 2 mit einem eine Ausnehmung aufweisenden, Kupplungsstück (nicht dargestellt) aber vom Stand der Technik her bekannt zu verbinden, wird ein leichter Druck P auf das rohrförmige Bauteil 8 ausgeübt, um dieses in Axialrichtung zu verschieben. Dabei trifft man auf einen verminderten Widerstand. Das rohrförmige Bauteil 8 zusammen mit dem rohrförmigen Bauteil 7 wird in das Innere des Kupplungsteiles 1 verschoben, wodurch der Ventilstössel 26 an der Wand 27 zur Anlage kommt und ein Öffnen des Ventiles 23, 26 gegen die von der Feder 25 ausgeübte Kraft bewirkt.

Demzufolge kann die verbleibende Hydraulikflüssigkeit, die noch im Inneren der Ringkammer 3 vorhanden ist, über die Bohrung 20 in die Kammer 21 abfliessen und von hier fliesst die Hydraulikflüssigkeit über die Kammer 22 sowie die Ventilöffnung 23 zur Durchgangsbohrung 30, um den Stutzen 31 zu erreichen und über die nicht dargestellte Rohrleitung zu dem zentralen Aufnahmegefäss des Fahrzeuges, welches die Hydraulikflüssigkeit aufnimmt, zu strömen.

Aufgrund der Möglichkeit, den verbleibenden hydraulischen Druck vollständig in der rohrförmigen Kammer 3 der Schnellkupplung 1 abzubauen, wird es demzufolge ermöglicht, ein Verbinden der zapfenartigen Schnellkupplung 1 mit einem eine Ausnehmung aufweisenden Kupplungstück, ohne Ölverluste durchzuführen, wobei dieser Vorgang ohne erheblichen Kraftaufwand auf die Bauteile der Flachflächen-Schnellkupplung erfolgen kann.

**Patentansprüche**

1. Flachflächen-Schnellkupplung (1), bestehend aus einem äusseren rohrförmigen Körper (5) und einem Stutzen (6), der in den äusseren rohrförmigen Körper (5) eingeschraubt ist, um ein in Axialrichtung verschiebbares rohrförmiges Bauteil (8) aufzunehmen, das mit einer Verlängerung (11) verbunden ist und als Verbindungsteil der Schnellkupplung (1) dient und das rohrförmige Bauteil (8) mit einem inneren rohrförmigen Körper (7) verbunden ist und der innere rohrförmige Körper (7) auf seinem Aussenumfang Dichtungsringe (12, 13) aufnimmt, **dadurch gekennzeichnet, dass**

a) in den inneren rohrförmigen Körper (7) eine als Durchgangsbohrung ausgebildete Kammer (22) eingebracht ist,

b) die über eine Kammer (21) und eine in das rohrförmige Bauteil (8) eingebrachte Querbohrung (20) mit einer Kammer (3) der Schnellkupplung (1) in Verbindung steht,

c) dass die Kammer (22) einen Ventilsitz (23) aufweist, der über einen Ventilstössel (24) absperrbar ist

d) und dieser Ventilstössel (24) durch eine Feder (25) vorgespannt wird

e) und eine Verlängerung (26) aufweist, die auf die Wand (27) einer ringförmigen Kammer (28) gerichtet ist, die zwischen dem inneren rohrförmigen Körper (7) und dem äusseren rohrförmigen Körper (5) gebildet ist und

f) von der ringförmigen Kammer (28) eine Durchgangsbohrung (30) abzweigt, die mit einem Ablaufstutzen (31) in Verbindung steht.

2. Flachflächen-Schnellkupplung, nach Patentanspruch 1, **dadurch gekennzeichet,** dass zwischen dem Rohrkörper (7) und der innenliegenden Wand des rohrförmigen Bauteiles (5) ein Dichtungsring (13) angeordnet ist und auch zwischen dem Stutzen (6) und der Innenwand des rohrförmigen Körpers (5) ein Dichtungsring (14) vorgesehen ist, und zwischen dem rohrförmigen Körper (7) und dem rohrförmigen Körper (5) ein Dichtungsring (12) und zwischen dem Stutzen (6) und dem rohrförmigen Bauteil (8) ein Dichtungsring (15) angeordnet ist.

3. Flachflächen-Schnellkupplung, nach Patentanspruch 1, **dadurch gekennzeichet,** dass die Feder (25) in der Kammer (22) angeordnet ist und den Ventilstössel (24) gegen den Ventilsitz (23) drückt.

4. Flachflächen-Schnellkupplung, nach Patentanspruch 1, **dadurch gekennzeichet,** dass die Wand (27), welche die Kammer (28) begrenzt, senkrecht zur Achse (X) des Ventilkörpers angeordnet ist.

## Claims

1. Flat-face quick-connect coupling (1), consisting of an outer tubular body (5) and a connecting piece (6) which is screwed into the outer tubular body (5) in order to accommodate a tubular component (8) which is displaceable in the axial direction, is connected to an extension (11) and serves as connecting part of the quick-connect coupling, and the tubular component (8) is connected to an inner tubular body (7), and the inner tubular body (7) accommodates sealing rings (12, 13) on its outer circumference, **characterized in that**

a) a chamber (22) designed as a through-bore is incorporated in the inner tubular body (7),
b) which chamber (22) is connected to a chamber (3) of the quick-connect coupling (1) via a chamber (21) and a transverse bore (20) incorporated in the tubular component (8),
c) **in that** the chamber (22) has a valve seat (23) which can be shut off via a valve stem (24),
d) and this valve stem (24) is preloaded by a spring (25)
e) and has an extension (26) which is directed towards the wall (27) of an annular chamber (28) which is formed between the inner tubular body (7) and the outer tubular body (5), and
f) a through-bore (30) branches off from the annular chamber (28) and is connected to a discharge connecting piece (31).

2. Flat-face quick-connect coupling according to Patent Claim 1, **characterized in that** a sealing ring (13) is arranged between the tubular body (7) and the inner wall of the tubular component (5), and a sealing ring (14) is also provided between the connecting piece (6) and the inner wall of the tubular body (5), and a sealing ring (12) is arranged between the tubular body (7) and the tubular body (5), and a sealing ring (15) is arranged between the connecting piece (6) and the tubular component (8).

3. Flat-face quick-connect coupling according to Patent Claim 1, **characterized in that** the spring (25) is arranged in the chamber (22) and presses the valve stem (24) against the valve seat (23).

4. Flat-face quick-connect coupling according to Patent Claim 1, **characterized in that** the wall (27) which defines the chamber (28) is arranged perpendicularly to the axis (X) of the valve body.

## Revendications

1. Raccord rapide à faces planes (1), se composant d'un corps tubulaire extérieur (5) et d'un ajutage (6) qui est vissé dans le corps tubulaire extérieur (5) afin de recevoir un composant tubulaire (8) pouvant être déplacé dans la direction axiale, lequel est connecté à une prolongation (11) et sert de pièce de connexion du rapport rapide (1), le composant tubulaire (8) étant connecté à un corps tubulaire intérieur (7) et le corps tubulaire intérieur (7) recevant sur sa périphérie extérieure des bagues d'étanchéité (12, 13),
**caractérisé en ce que**

a) une chambre (22) réalisée sous forme d'alésage traversant est pratiquée dans le corps tubulaire intérieur (7),

b) laquelle est en liaison, par le biais d'une chambre (21) et d'un alésage transversal (20) pratiqué dans le composant tubulaire (8), avec une chambre (3) du raccord rapide (1),

c) **en ce que** la chambre (22) présente un siège de soupape (23) qui peut être bloqué par le biais d'un poussoir de soupape (24)

d) et ce poussoir de soupape (24) est précontraint par un ressort (25),

e) et présente une prolongation (26) qui est orientée vers la paroi (27) d'une chambre annulaire (28) qui est formée entre le corps tubulaire intérieur (7) et le corps tubulaire extérieur (5) et

f) un alésage traversant (30) part de la chambre annulaire (28) et est en liaison avec un ajutage d'écoulement (31).

2. Raccord rapide à faces planes selon la revendication 1,
**caractérisé en ce qu'**une bague d'étanchéité (13) est disposée entre le corps tubulaire (7) et la paroi intérieure du composant tubulaire (5) et qu'une bague d'étanchéité (14) est aussi prévue entre l'ajutage (6) et la paroi intérieure du corps tubulaire (5), et qu'une bague d'étanchéité (12) est disposé entre le corps tubulaire (7) et le corps tubulaire (5) et qu'une bague d'étanchéité (15) est disposée entre l'ajutage (6) et le composant tubulaire (8).

3. Raccord rapide à faces planes selon la revendication 1, **caractérisé en ce que** le ressort (25) est disposé dans la chambre (22) et presse le poussoir de soupape (24) contre le siège de soupape (23).

4. Raccord rapide à faces planes selon la revendication 1, **caractérisé en ce que** la paroi (27) qui limite la chambre (28) est disposée perpendiculairement à l'axe (X) du corps de soupape.

FIG.1

FIG.2